(19) Europäisches Patentamt
European Patent Office
Office européen des brevets

(11) Veröffentlichungsnummer: **0 013 767**
**A1**

# (12) EUROPÄISCHE PATENTANMELDUNG

(21) Anmeldenummer: **79105415.8**

(22) Anmeldetag: **31.12.79**

(51) Int. Cl.³: **C 08 L 79/08**, C 08 L 63/00, C 09 D 3/00, H 01 B 3/30

(30) Priorität: **09.01.79 DE 2900560**

(43) Veröffentlichungstag der Anmeldung: **06.08.80 Patentblatt 80/16**

(84) Benannte Vertragsstaaten: **DE FR GB IT**

(71) Anmelder: **BAYER AG, Zentralbereich Patente, Marken und Lizenzen, D-5090 Leverkusen 1, Bayerwerk (DE)**

(72) Erfinder: **Burgmer, Willy, Am Katterbach 70, D-5060 Berg.-Gladbach 2 (DE)**
Erfinder: **Clarenz, Werner, Dr., Walter-Flex-Strasse 32, D-5090 Leverkusen (DE)**

(54) **Bindemittelmischungen aus Polyamidimidharzen und Epoxidverbindungen und Lacklösungen enthaltend die Bindemittelmischungen und damit lackierte Metalle.**

(57) Bindemittel enthaltend eine Mischung aus Polyamidimidharzen und Epoxidverbindungen mit einem Epoxidäquivalent von 70 bis 600.

EP 0 013 767 A1

BAYER AKTIENGESELLSCHAFT 5090 Leverkusen, Bayerwerk
Zentralbereich
Patente, Marken und Lizenzen Str/bc/kl

# Bindemittelmischungen aus Polyamidimidharzen und Epoxidverbindungen und Lacklösungen enthaltend die Bindemittelmischungen und damit lackierte Metalle.

Die Erfindung betrifft Bindemittel für Einbrennlacke, die Mischungen aus Polyamidimidharzen und Epoxidverbindungen enthalten.

Es ist bekannt, daß sich Polyamidimidharze durch eine gute Haftung auf Metallen wie z.B. Kupfer, Aluminium und Eisen, gute mechanische Eigenschaften, eine gute Lösungsmittel- und Fettbeständigkeit und eine hohe Wärmebeständigkeit auszeichnen.

Die Harze werden daher vorzugsweise als hochtemperaturbeständige Bindemittel für die Drahtlackierung und die dekorative Außenbeschichtung von Aluminiumgeschirr verwendet. Für diese Einsatzgebiete genügen die mit einem Lackauftrag an senkrechten Flächen erzielbaren ca. 15 µm Trockenfilmdicken. Für andere Anwendungen, z.B. lösungsmittel- oder chemikalienbeständige Lackierungen, sind meist

dickere Schichten erforderlich, die nicht mit einem Auftrag zu erhalten sind. Je nach gewünschter Schichtdicke ist ein zwei- oder mehrmaliger Lackauftrag mit Zwischentrocknung bei erhöhter Temperatur erforderlich. Während der mehrere Minuten dauernden Endtrocknung bei Temperaturen um 250°C, durch die die gewünschten Filmeigenschaften erhalten werden, bilden sich bei größeren Schichtdicken auf der gesamten Filmfläche Blasen, die sich bisher kaum verhindern ließen.

Überraschenderweise läßt sich diese Blasenbildung verhindern, wenn man eine Bindemittelmischung aus Polyamidimidharzen und Epoxidverbindungen zur Lackierung verwendet.

Gegenstand der Erfindung sind daher Bindemittel, insbesondere für Einbrennlacke, enthaltend eine Mischung aus Polyamidimidharzen und Epoxidverbindungen mit einem Epoxidäquivalent von 70 bis 600, vorzugsweise 90 bis 500.

Unter Epoxiden werden in der vorliegenden Anmeldung Verbindungen verstanden, die mindestens eine 1,2-Epoxidgruppe pro Molekül enthalten und ein Epoxidäquivalent von 70 bis 600 aufweisen.

Die zu verwendenden Epoxidverbindungen können Polyglycidylether mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken (d.h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkyläthers erhalten wurden (vgl. britische Patentschrift 1 017 612), aus Polyphenolen, die durch Kondensation von Phenolen und langkettigen, mindestens 2 Halogenatome enthaltenden Halogenparaffinen erhalten wurden (vgl. GB-PS 1 024 288).

Weiter seien genannt Glycidyläther mehrwertiger Alkohole, beispielsweise aus 1,4-Butandiol, 1,4-Butendiol, Glycerin, Trimethylolpropan, Pentaerythrit und Polyäthylenglykolen. Von weiterem Interesse sind Triglycidylisocyanurat, N,N'-Diepoxypropyloxamid, Polyglycidylthioäther aus mehrwertigen Thiolen, wie beispielsweise aus Bismercaptomethylbenzol, Diglycidyl-trimethylentrisulfon.

Außerdem kommen in Frage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-Diglycidylester, Hexahydrophthalsäurediglycidylester, die gegebenenfalls durch Methylgruppen substituiert sein können und Glycicylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

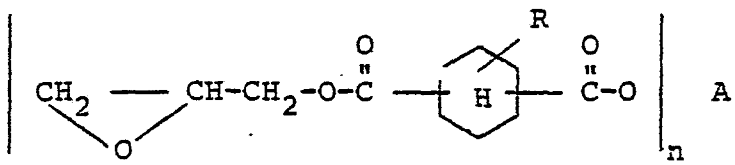

worin A einen mindestens zweiwertigen Rest eines gegebenenfalls durch Sauerstoff und/oder cycloaliphatische Ringe unterbrochenen, aliphatischen Kohlenwasserstoffs oder den zweiwertigen Rest eines cycloaliphatischen Kohlenwasserstoffs, R Wasserstoff oder Alkylreste mit 1 bis 3 C-Atomen und n eine Zahl zwischen 2 und 6 bedeutet, oder Mischungen von Glycidylcarbonsäureestern der angegebenen allgemeinen Formel (vgl. britisches Patentschrift 1 220 702).

Außerdem können Epoxidierungsprodukte von mono- und diolefinisch ungesättigten Verbindungen wie z.B. Methyl- oder Methacrylsäureestern des Glycids, Allylglycidäther, Phthalsäureglycidallylester, 2,2-Bis-/p-hydroxy-phenyl/-propan-glycid-allyl-ether, 2,3-Epoxybuttersäure-allylester, Vinyl-epoxyäthyl-benzol, 3,4-Epoxy-cyclobuten-1, 2,3-Epoxy-cyclopentyl-alkyl-äther oder 1,2-Dimethylen-4,5-cyclohexanoxid, gegebenenfalls copolymerisiert mit α-Olefinen oder Dienen verwendet werden. Die Epoxidierung von ungesättigten Verbindungen wie ungesättigten Aldehyden und Ketonen, vorzugsweise Acrolein, Zimtaldehyd; ungesättigten Fettsäuren, vorzugsweise Linolensäure;

ungesättigte Glyceride, vorzugsweise Sojabohnenöl; α-Olefinen, vorzugsweise Ethylen, Dien, vorzugsweise Butadien, Isopren; mit Persäure und gegebenenfalls anschließende Homo- oder Copolymerisation können auch die erfindungsgemäßen Polyepoxidverbindungen erhalten werden.

Vorzugsweise werden folgende Epoxidverbindungen oder deren Mischungen verwendet: Polyglycidyläther mehrwertiger Phenole, insbesondere aus Bisphenol A bzw. Bisphenol F, Hexandioldiglycidäther, Butandioldiglycidäther oder Propylaminodiglycid.

Als Polyamidimidharze werden die nach bekannten Methoden durch Umsetzung von cyclischen Anhydridverbindungen mit Polyisocyanaten bzw. Polyaminen erhaltenen Polymeren eingesetzt.

Vorzugsweise sind dies die Polymeren,die man durch Umsetzung folgender Ausgangsverbindungen erhält.

Von den cyclischen Carbonsäureanhydridverbindungen sind dies vorzugsweise cyclische Carbonsäureanhydridverbindungen der allgemeinen Formel

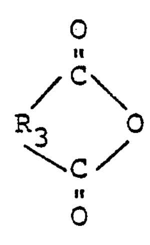

in der $R_3$ einen gegebenenfalls substituierten aliphatischen, cyclialiphatischen, heterocyclischen, aliphatischaromatischen oder aromatischen Rest bedeutet, der neben der cyclischen Anhydridgruppe mindestens noch einfach durch eine weitere kondensationsfähige funktionelle Gruppe wie eine cyclische Anhydridgruppe, eine Carboxyl-, Ester- oder $SO_3H$-Gruppe, vorzugsweise durch eine Carboxyl- oder Carbonestergruppe, substituiert ist.
$R^3$ steht vorzugsweise für einen aliphatischen Rest mit $C_2$-$C_{10}$, einen cycloaliphatischen Rest mit $C_5$-$C_{10}$, einen aromatischen Rest mit $C_6$-$C_{20}$ oder aliphatisch-aromatischen Rest mit $C_7$-$C_{21}$.

Als Beispiele für die Carbonsäureanhydride seien genannt:

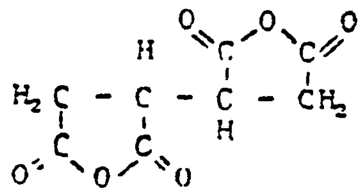
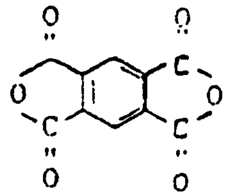
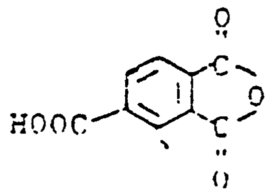

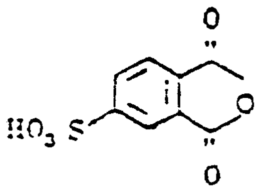
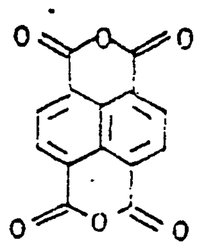
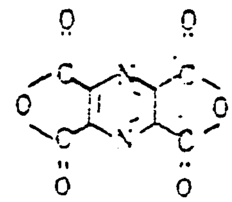
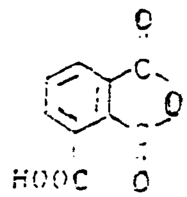

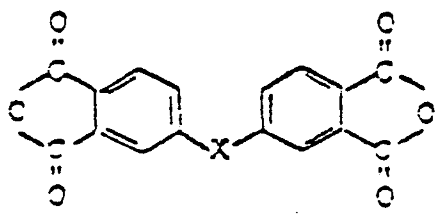

X = -O-, -S-, -SO$_2$-,

$-\underset{\underset{O}{\|}}{C}-$, -N=N-,

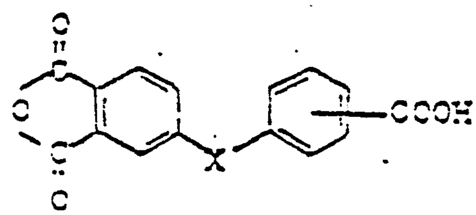

X= 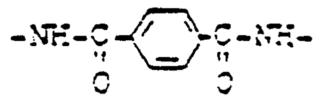 ,

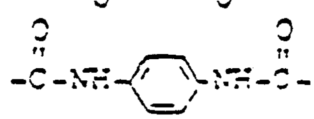 ,

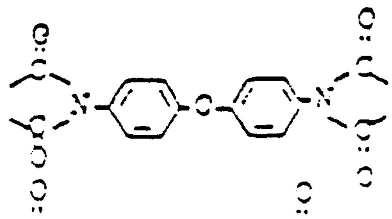 ,

$-\overset{O}{\overset{\|}{C}}-O(-CH_2)_n-O-\overset{O}{\overset{\|}{C}}-$ ,

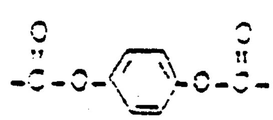

n = 1-4, vorzugsweise 2

Als Polyisocyanate sind die aliphatischen, cycloaliphatischen, araliphatischen, aromatischen und heterocyclischen Polyisocyanate zu nennen (vgl. Annalen 562, Seiten 75 bis 136), wie beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanato-methyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, perchlorierte Arylpolyisocyanate, wie sie z.B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der US-Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in den deutschen Patentschriften

1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394, in der britischen Patentschrift 889 050 und in der französischen Patentschrift 7 017 514 beschrieben werden, durch Telomerisationsreaktionen hergestellte Polyisocyanate, wie sie z.B. in der belgischen Patentschrift 723 640 beschrieben werden, Estergruppen aufweisende Polyisocyanate, wie sie z.B. in den britischen Patentschriften 956 474 und 1 072 956, in der US-Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385.

Dabei eignen sich auch die bei der technischen Isocyanatherstellung anfallenden, Isocyanatgruppen aufweisenden Destillationsrückstände, gegebenenfalls gelöst in einem oder mehreren der vorgenannten Polyisocyanate. Ferner ist es möglich, beliebige Mischungen der vorgenannten Polyisocyanate zu verwenden.

Vorzugsweise seien von den Polyisocyanaten die der allgemeinen Formeln

$$R^2 (-NCO)_z$$

in denen

$R^2$ für einen, gegebenenfalls substituierten Alkylrest mit 1 bis 20 C-Atomen, einen Arylrest mit 5 bis 12 C-Atomen, einen Cycloalkylrest mit 5 bis 12 C-Atomen, einen Alkyl-Arylrest mit 6 bis 20 C-Atomen und einem Heteroatom wie N, O oder S enthaltenden Aryl- oder Cycloalkylrest mit 5 bis 12 Ringatomen steht. z ist eine ganze Zahl von 2 bis 4, vorzugsweise 2 bis 3, genannt.

Besonders bevorzugt sind die technisch leicht zugänglichen Gemische aus Toluylen-diisocyanaten, m-Phenylendiisocyanat, sowie phosgenierte Kondensate aus Anilin und Formaldehyd mit Polyphenylen-methylen-struktur und die symmetrischen Verbindungen 4,4'-Diisocyanato-diphenylmethan, 4,4'-Diisocyanatodiphenyläther, p-Phenylendiisocyanat und 4,4'-Diisocyanatodiphenyl-dimethylmethan.

Entsprechend den genannten Polyisocyanaten werden auch die Polyamine, soweit sie technisch zugänglich sind, zur Herstellung der Polyamidimidharze verwendet.

Die Bindemittelmischung kann das Polyamidimidharz in Mengen von 99 bis 1 Gew.-% und die Epoxidverbindung in Mengen von 1 bis 99 Gew.-% enthalten. Vorzugsweise werden die beiden Komponenten in Mengen von 99 bis 40 Gew.-% Polyamidimidharz zu 1 bis 60 Gew.-% Epoxidverbindung gemischt.

Die Mischungen lassen sich in einfacher Weise durch Zusammengießen der beiden Bindemittelkomponenten herstellen, wenn die Komponenten flüssig sind. Die Polyamidimidharze

löst man vorzugsweise in einem der bekannten Lösungsmittel wie einem Phenol, vorzugsweise Phenol, Kresol; substituiertem Amid wie Dimethylformamid, Dimethylacetamid; Lacton wie p-Butyrolacton; oder N-Methylpyrrolidon.

Vorzugsweise werden Dimethylformamid, Dimethylacetamid, N-Methyl-pyrrolidon verwendet.

Diese genannten Lösungsmittel sind auch zur Herstellung der erfindungsgemäßen Lacklösungen geeignet, die einen Feststoffgehalt von 5 bis 60 Gew.-%, vorzugsweise 20-40 Gew.-%, aufweisen. Außerdem können den Lacklösungen auch Nichtlösungsmittel, sogenannte Verschnitt-Lösungsmittel, zum Verdünnen zugesetzt werden. Vorzugsweise sind dies Aromaten wie Xylole, Ester wie Butylacetat, Methylglykolacetat, Äthylenglykolacetat oder Ketone wie Methylisobutylketon und Alkylaromaten.

Den Bindemittelmischungen bzw. Lacklösungen können die üblichen Hilfsmittel zugesetzt werden, wie z.B. anorganische und organische Pigmente, vorzugsweise anorganische Pigmente, oberflächenaktive Substanzen, Antischaummittel, Thioxotropierungsmittel, Trennmittel wie Siliconöle, Polytetrafluoräthylen, Füllstoffe wie Talkum, Dolomit und Schwerspat. Als anorganische Pigmente oder deren Mischungen können beispielsweise Titandioxid, Eisenoxide, Cadmiumpigmente eingesetzt werden.

Zu den Bindemittelmischungen können noch weitere Harze wie Phenolharze oder Melaminharze in Mengen von 1 bis 30 Gew.-% zugesetzt werden.

Es ist auch möglich, die Bindemittelkomponenten bei der Herstellung eines Lackes während der Anreibung zu vermischen.

Dabei werden die üblichen Abreibeaggregate wie z.B. Dissolver, Kugelmühlen, Sandmühlen verwendet.

Die erfindungsgemäßen Bindemittelmischungen bzw. Lacklösungen eignen sich besonders zur Beschichtung von Metallen, die nach den üblichen Verfahren wie Spritzen, Gießen, Tauchen, Fluten, Berakeln oder ähnliche Verfahren lackiert werden.

Die Lackierungen zeichnen sich durch eine Blasenfreiheit bzw. Porendichtigkeit auch bei höheren Schichtdicken, gute Haftung, besonders auf Kupfer, Aluminium und Eisen, gute Lösungsbeständigkeit, sehr gute Lösungsmittel- und Chemikalienbeständigkeit und Kochwasserbeständigkeit aus.

Beispiel 1

a) 40 g eines Polyamidimidharzes, das man durch Umsetzung von Trimellithsäureanhydrid mit 4,4'-Diisocyanato-diphenylmethan erhalten hat, werden in einer Mischung aus N-Methylpyrrolidon und Dimethylacetamid (4:3) zu einer 33 Gew.-%igen Lösung gelöst. Zu dieser Lösung werden 4,0 g Epoxidharz auf Basis Biphenol A mit einem Epoxidäquivalent von 180-200 und 3,6 g eines handelsüblichen Verlaufsmittels auf Basis eines Methylphenylsilikonharzes, 10 %ig in Xylol, und 20 g eines Lösungsmittelgemisches aus 1 Teil Dimethylformamid und 5 Teilen Xylol unter einem Schnellrührer zusammengegeben und bis zur Homogenität vermischt.

b) 33,3 g eines Polyamidimidharzes einer Zusammensetzung wie unter a) beschrieben werden in einer Mischung aus N-Methylpyrrolidon und Dimethylacetamid (4:3) zu einer 33 Gew.-%igen Lösung gelöst. Zu dieser Lösung werden 10 g Epoxidharz einer Zusammensetzung wie unter a) beschrieben und 3,6 g eines handelsüblichen Verlaufsmittels auf Basis eines Methylphenylsilikonharzes, 10 %ig in Xylol, und je 20 g eines Lösungsmittelgemisches aus 1 Teil Dimethylformamid und 5 Teilen Xylol unter einem Schnellrührer zusammengegeben und bis zur Homogenität vermischt.

c) Weitere Lacklösungen werden erhalten, indem man den beiden unter a) und b) aufgeführten Rezepturen noch 17,6 g eines Thixotropiermittels auf Basis Montmorillonit, 15 %ig, und 33,0 g Titandioxid homogen zumischt.

Vor der Lackierung wird jede der aufgeführten Lacklösungen mit einer Mischung aus Dimethylformamid/Xylol (1:5) auf eine Auslaufviskosität von $70_s$ im DIN-Becher, 4 mm, eingestellt.

Die Lacke werden auf Aluminium-, Eisen- bzw. Stahlbleche aufgespritzt und 10 Minuten bei 250°C eingebrannt. Für eine Trockenschichtdicke von ca. 40 µm muß der Lack zweischichtig aufgebracht werden. Jede Schicht wird zunächst 15 Minuten bei 180°C vorgetrocknet und zuletzt die Gesamtbeschichtung 10 Minuten bei 250°C ausgehärtet.

Die Porendichtigkeit, d.h. Blasenfreiheit der Beschichtungen wurde durch Hochspannungsprüfungen nach VDI 25539, Absatz 3.3, festgestellt. Als Trägermaterial dienten wie oben angegeben beschichtete Eisenbleche mit den Abmessungen 100x200x1 mm. Die Beschichtungen waren sowohl bei 1000 wie 2400 V Spannung porendicht.

Die ausgezeichnete Lösungsmittel- und Chemikalienbeständigkeit der Lackierungen zeigt die Tabelle 1. Zur Prüfung wurden auf die ausgehärteten Lackschichten mit Lösungsmitteln getränkte Wattebäusche gelegt und mit Glasschälchen abgedeckt. Die Prüfzeit betrug maximal 120 Stunden.

Tabelle 1

Lösungsmittelbeständigkeit

| | Polyamid-imid ohne Zusatz | Lack a) + 10 % Epoxidharz | Lack b) + 30 % Epoxidharz |
|---|---|---|---|
| Dimethylformamid | 30 Min. = 1<br>$5^h$ = 4 | $72^h$ = 0<br>$120^h$ = 2 | $72^h$ = 0<br>$120^h$ = 1 |
| Dimethylacetamid | $2^h$ = 1<br>$72^h$ = 3 | 0 | 0 |
| N-Methylpyrolidon | $24^h$ = 1<br>$120^h$ = 3 | 0 | 0 |
| Aceton | 0 | 0 | 0 |
| Xylol | 0 | 0 | 0 |
| Aethanol | 0 | 0 | 0 |
| Cyclohexanon | 0 | 0 | 0 |
| Ethylglykolacetat | 0 | 0 | 0 |

0 = unverändert
1 = Spur erweicht
2 = erweicht
3 = stark erweicht
4 = gequollen

Die Prüfung der mechanischen Eigenschaften der Lacke sind in Tabelle 2 zusammengestellt.

Tabelle 2

| | Polyamid-imidharz ohne Zusatz | a) Lack + 10 % Epoxid-harz | b) + 30 % Epoxid-harz | Lack + 10 % Epoxid-harz | c) + 30 % Epoxid-harz |
|---|---|---|---|---|---|
| Glanz | 100 | 100 | 100 | 100 | 100 |
| E-Wert | 6,1 nm | 7,8 nm | 7,1 nm | 6,6 nm | 6,5 nm |
| Bleistifthärte bei 20°C | 7 H | 6 H | 6 H | 7 H | 6 H |
| " " 180°C | 7 H | 6 H | 6 H | 7 H | 7 H |
| Schlagtiefung nach DIN 53156 | + 40 | + 60 | + 30 | + 16 | + 24 |
| T-Bend-Test | 3,5 | 1,5 | 2,5 | 3,0 | 3,0 |

Patentansprüche

1. Bindemittel enthaltend eine Mischung aus Polyamidimidharzen und Epoxidverbindungen mit einem Epoxidäquivalent von 70 bis 600.

2. Bindemittel nach Anspruch 1, dadurch gekennzeichnet, daß die Mischung 99 bis 1 Gew.-% der Polyamidimidharze und 1 bis 99 Gew.-% der Epoxidverbindung enthält.

3. Bindemittel nach Ansprüchen 1 und 2, dadurch gekennzeichnet, daß die Mischung 99 bis 40 Gew.-% Polyamidimidharze und 1 bis 60 Gew.-% Epoxidverbindungen enthält.

4. Lacklösungen bzw. Lackmischungen, insbesondere für Einbrennlacke, enthaltend ein Bindemittel gemäß Ansprüchen 1 bis 3 und übliche Lösungsmittel.

5. Lacklösungen nach Anspruch 4 mit einem Feststoffgehalt von 5 bis 60 Gew.-%.

6. Lacklösungen nach Ansprüchen 4 und 5 mit einem Feststoffgehalt von 20 bis 40 Gew.-%.

7. Metalle beschichtet mit Lacklösung bzw. Lackmischungen nach Ansprüchen 4 - 6.

Europäisches Patentamt

# EUROPÄISCHER RECHERCHENBERICHT

0013767

Nummer der Anmeldung

EP 79 10 5415

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| X | CHEMICAL ABSTRACTS, Band 73, Nr. 18, 2. November 1970, Seite 36, Nr. 88677s<br>Columbus, Ohio, U.S.A.<br>& JP - A - 70 12985 (HITACHI CHEMICAL CO., LTD.) 11-05-1970<br>* Zusammenfassung *<br>-- | 1-7 | C 08 L 79/08<br>63/00<br>C 09 D 3/00<br>H 01 B 3/30 |
| X | US - A - 3 458 595 (W.W. ULMER)<br>* Ansprüche *<br>-- | 1-7 | |
| A | FR - A - 2 329 721 (GENERAL ELECTRIC)<br>---- | | RECHERCHIERTE SACHGEBIETE (Int. Cl.³)<br>C 08 L 79/08<br>63/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 14-04-1980 | LEROY |